# EUROPEAN PATENT APPLICATION

(11) **EP 4 636 882 A2**
(43) Date of publication of application: **22.10.2025**
(21) Application number: 25169764.5
(22) Date of filing: 10.04.2025
(51) Int. Cl.: H01M 10/04, H01M 10/0525, H01M 10/0583, H01M 50/46

(54) **ELECTRODE PLATE STACKING APPARATUS AND ELECTRODE PLATE STACKING METHOD USING SAME**

(30) Priority: 18.04.2024 KR 20240052366
(71) Applicant: Samsung SDI Co., Ltd., Yongin-si, Gyeonggi-do 17084 (KR)
(72) Inventor: KIM, HEONHEE, Yongin-si, Gyeonggi-do 17084 (KR); KIM, BO HYUN, Yongin-si, Gyeonggi-do 17084 (KR); YOO, SEUNGYEOL, Yongin-si, Gyeonggi-do 17084 (KR); KIM, HYEOKJOO, Yongin-si, Gyeonggi-do 17084 (KR); KIM, DUCKHYUN, Yongin-si, Gyeonggi-do 17084 (KR); JANG, WOONSUK, Yongin-si, Gyeonggi-do 17084 (KR)
(74) Representative: Gulde & Partner

(57) **Abstract**

Provided are an electrode plate stacking apparatus (1000), another electrode plate stacking apparatus (2000) and an electrode plate stacking method using the same. The electrode plate stacking apparatus (1000) and the other electrode plate stacking apparatus (2000) respectively comprise rotary plates. The rotary plates (200, 300) of the electrode plate stacking apparatus (1000), while rotating, place the electrode plates (P, N) onto each other and press the electrode plates (P, N) against each other to cause the electrode plates (P, N) to bond with each other via a surface coated adhesive. The rotary plates (200a, 300a) of the other electrode plate stacking apparatus (2000), while rotating, fold a separator (S) and press an electrode plate (P, N) onto a folded portion (FP1) of the separator (S).

## Description

### BACKGROUND

### 1. FIELD

The invention relates to an electrode plate stacking apparatus and an electrode plate stacking method using the same and, more particularly, to an electrode plate stacking apparatus configured to press an electrode plate for a secondary battery using an electrode plate pressing rotary blade to improve stability of an electrode plate stack.

### 2. Description of Related Art

Recently, there has been a growing interest in high-capacity secondary batteries to replace fossil-fueled internal combustion engines or for use in small electronic devices such as mobile devices.

A stacked secondary battery may be configured to include an electrode plate stack structure in which positive and negative electrode plates are stacked with a separator (or separator film) provided therebetween. The capacity of the secondary battery is determined by the number of the stacked electrode plates.

There is a growing desire for an electrode plate stacking apparatus able to improve the mass production of electrode plate assemblies and an adhesion state of electrode plate stack structures. In particular, a reduction of processing time is desired.

The above information disclosed in this Background section is for enhancement of understanding of the background of the present disclosure, and therefore, it may contain information that does not constitute related (or prior) art.

### SUMMARY

According to an aspect of the invention, an electrode plate stacking apparatus according to claim 1 is provided.

According to another aspect of the invention, an electrode plate stacking apparatus according to claim 8 is provided.

According to yet another aspect of the invention, a method according to claim 15 is provided.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

An electrode plate stacking apparatus according to an aspect of the invention includes a rotary supporting plate configured to be rotatable about a first direction [and allow a positive electrode plate to be bonded to a negative electrode plate having a surface coated with an adhesive to form an electrode plate assembly], a rotary pressing plate spaced apart from the rotary supporting plate in a second direction perpendicular to the first direction and configured to be rotatable about the first direction and interfere with the rotary supporting plate [to press the electrode plate assembly], and a receiver disposed below the rotary supporting plate in a third direction perpendicular to the first direction and the second direction and configured to receive the electrode plate assembly freely falling in response to rotation of the rotary supporting plate.

According to one or more embodiments, the rotary supporting plate may include a first shaft configured to extend in the first direction and configured to rotate in a first rotational direction with respect to the first direction, a plate-shape supporting blade configured to have a width in the first direction and a length in the second direction, with a central portion thereof being coupled to the first shaft and a first driver configured to selectively rotate the first shaft.

According to one or more embodiments, the rotary pressing plate may include a second shaft spaced apart from the first shaft in the second direction and extending in the first direction and configured to rotate about the first direction, a pressing blade configured to have the same plate shape and size as the supporting blade, with a central portion thereof being coupled to the second shaft and a second driver configured to selectively rotate the second shaft.

According to one or more embodiments, the supporting blade may include an active end on which the electrode plate assembly is positioned and an inactive end positioned symmetrically to the active end with respect to the first shaft, with the electrode plate assembly not being positioned on the inactive end, and the pressing blade may include a pressing end configured to press the electrode plate assembly placed on the active end and a free end positioned symmetrically to the pressing end with respect to the second shaft.

According to one or more embodiments, the first shaft and the second shaft may be spaced apart from each other by a separation distance corresponding to a length of the active end or the pressing end to press the electrode plate assembly with an entire surface of the pressing end.

According to one or more embodiments, the electrode plate stacking apparatus may further include a control center connected to the first rotary driver and the second driver and configured to control operations of the supporting blade and the pressing blade in response to the electrode plate assembly being placed and the electrode plate assembly being pressed.

According to one or more embodiments, the control center may include an assembly controller configured to control the first driver and the second driver so that the pressing blade is positioned vertically in the third direction and the supporting blade is positioned parallel to a plane defined by the first direction and the second direction while the electrode plate assembly is being formed, and a pressing controller configured to control the first driver and the second driver to apply a torque in a same direction to the pressing blade and the supporting blade so that the supporting blade and the pressing blade press against each other while the electrode plate assembly is being pressed.

According to one or more embodiments, the electrode plate stacking apparatus may further include an electrode plate feeder comprising storages configured to store the positive electrode plate and the negative electrode plate, respectively, and a loader configured to sequentially extract and load the negative electrode plate and the positive electrode plate onto the rotary supporting plate.

According to one or more embodiments, the adhesive may include a mixture of alumina and polyvinylidene fluoride.

According to one or more embodiments, the receiver may include a flat support configured to have a flat surface, a receiving tray disposed on the flat support and configured to receive the electrode plate assembly falling from the rotary supporting plate and a height adjustment member disposed below the flat support to adjust the height of the receiving tray according to the electrode plate assembly being received.

An electrode plate stacking apparatus according to another aspect of the invention includes a separator feeder configured to supply a separator downwards in a third direction being a vertical direction, a first rotary plate disposed on a first side portion of the separator to be rotatable about a first direction perpendicular to the third direction and configured to periodically fold the separator and transform a portion of the separator into a first folded portion, a second rotary plate disposed on the second side portion of the separator to be spaced apart from the first rotary plate in a second direction perpendicular to the first direction and the third direction and configured to be rotatable about the first direction and periodically fold the separator and transform a portion of the separator into a second folded portion, an electrode plate feeder configured to supply a plurality of electrode plates to be separated in the third direction by the separator by alternately positioning the electrode plates having different polarities on the first folded portion and the second folded portion, and a receiver disposed below the separator feeder and configured to receive an electrode plate stack structure which is the electrode plates placed on the first folded portion and the second folded portion and separated from each other, wherein the separator and the electrode plates are pressed between the first rotary plate and the second rotary plate.

According to one or more embodiments, the separator may include a double-sided adhesive material such that top and bottom surfaces of the first folded portion and the second folded portion are bonded to the electrode plates.

According to one or more embodiments, the separator feeder may include feed rollers configured to supply the separator from a feed reel toward the receiver, and a separator driver configured to move the feed rollers in the first direction to cover the first rotary plate and the second rotary plate with the first folded portion and the second folded portion, respectively.

According to one or more embodiments, the first rotary plate may include a first rotary shaft extending in the first direction and configured to rotate about the first direction, a plate-shaped first rotary blade having a width in the first direction and a length in the second direction, with a central portion thereof being coupled to the first rotary shaft, and a first rotary driver configured to selectively rotate the first rotary shaft, and the second rotary plate comprises a second rotary shaft spaced apart from the first rotary shaft in the second direction, extending in the first direction, and configured to rotate about the first direction, a second rotary blade having the same plate shape and size as the first rotary blade, with a central portion thereof being coupled to the second rotary shaft, and a second rotary driver configured to selectively rotate the second rotary shaft.

According to one or more embodiments, the first rotary blade may include a first rotary supporting end covered with the first folded portion and supporting one of the electrode plate and a first rotary exposure end positioned symmetrically to the first rotary supporting end with respect to the first rotary shaft and not covered with the first folded portion, the second rotary blade comprises a second rotary supporting end covered with the second folded portion and supporting another one of the electrode plate and a second rotary exposure end positioned symmetrically to the second rotary supporting end with respect to the second rotary shaft and not covered with the second folded portion, and the electrode plates and the separator are pressed between the first rotary supporting end and the second rotary supporting end.

According to one or more embodiments, the electrode plate stacking apparatus may further include a control center connected to the first rotary driver, the second rotary driver, and the separator driver and configured to control the first rotary plate, the second rotary plate, and the feed rollers to press the electrode plates and the separator in the first folded portion and the second folded portion.

According to one or more embodiments, the control center may include a first folding controller configured to control the first rotary plate and the feed rollers to form the first folded portion in the separator, a second folding controller configured to control the second rotary plate and the feed rollers to form the second folded portion in the separator, and a pressing controller configured to control the driving of the first rotary plate and the second rotary plate to press the electrode plates and the separator in the first folded portion and the second folded portion.

According to one or more embodiments, the receiver may include a flat support configured to have a flat surface, a receiving tray disposed on the flat support and configured to receive the electrode plate stack structure falling in response to the rotation of the first rotary plate or the second rotary plate and a height adjustment member disposed below the flat support to adjust the height of the receiving tray according to the electrode plate stack structure being received.

An electrode plate stacking method according to yet another aspect of the invention includes horizontally moving a separator supplied downwardly to cover a first rotary blade disposed on a first side portion of the separator to form a first folded portion, positioning a first electrode plate on the first folded portion supported by the first rotary blade, rotating a second rotary blade disposed a second side portion of the separator to press the first electrode plate toward the first rotary blade and bonding the first electrode plate and the separator, rotating the first rotary blade to cause a bonded structure of the separator and the first electrode plate to fall downwardly, horizontally moving the separator to cover the second rotary blade to form a second folded portion, positioning a second electrode plate on the second folded portion supported by the second rotary blade, rotating the first rotary blade to press the second electrode plate toward the second rotary blade and bonding the second electrode plate and the separator, and rotating the second rotary blade to cause a bonded structure of the separator and the second electrode plate to fall downward.

According to one or more embodiments, the bonding of the first electrode plate and the separator and the bonding of the second electrode plate and the separator may be performed by applying a rotational torque in the same direction to the first rotary blade and the second rotary blade.

According to the electrode plate stacking apparatus as described above and the electrode plate stacking method using the same, a single positive electrode plate and a single negative electrode plate may be individually extracted and placed on a supporting blade capable of rotating about the first direction to form an electrode plate assembly using an adhesive instead of or in addition to a separator, and the electrode plate assembly may be pressed using the rotary pressing plate spaced apart from the supporting blade by a separation distance in the second direction and capable of rotating about the first direction.

In addition, the adhesion stability may be improved by pressing the positive electrode plate and negative electrode plate and the separator using a pair of rotary plates. Accordingly, any movement inside a secondary cell may be reduced and the stability of the secondary cell may be improved.

According to an embodiment, the electrode stacking apparatus can be configured such that during operation thereof, the rotary supply plate supports the negative electrode plate and the positive electrode plate with one of the electrode plates between the other one of the electrode plates and the rotary supporting plate. Further, during operation, the electrode stacking apparatus can be configured such that the rotary pressing plate rotates to be essentially parallel to the rotary supporting plate, wherein the rotary pressing plate presses towards the rotary supporting plate with the electrode plates therebetween.

According to an embodiment, the electrode stacking apparatus can be configured such that during operation thereof, the first rotary plate periodically folds the separator into the first folded portion while rotating. The second rotary plate can periodically fold the separator into the second folded portion while rotating. The second rotary plate can be configured to fold the second folded portion onto the first folded portion. The electrode feeder can be configured such that during oration, electrode feeder supplies electrode plates. The electrode feeder, during operation, can feed exclusively positive electrode plates or negative electrode plates. The electrode feeder, during operation, can feed electrode plates on sides of the separator that, in the folded state of the separator, face in the same direction, e.g against the third direction or upwards.

In other words, provided are an electrode plate stacking apparatus, another electrode plate stacking apparatus and an electrode plate stacking method using the same. The electrode plate stacking apparatus and the other electrode plate stacking apparatus respectively comprise rotary plates. The rotary plates of the electrode plate stacking apparatus, while rotating, place the electrode plates onto each other and press the electrode plates against each other to cause the electrode plates to bond with each other via a surface coated adhesive. The rotary plates of the other electrode plate stacking apparatus, while rotating, fold a separator and press an electrode plate onto a folded portion of the separator.

In other words, a rotary supporting plate is rotatable about a first direction and allows a positive electrode plate to be bonded to a negative electrode plate having a surface coated with an adhesive to form an electrode plate assembly. A rotary pressing plate is spaced apart from the rotary supporting plate in a second direction perpendicular to the first direction, is rotatable about the first direction, and interferes with the rotary supporting plate to press the electrode plate assembly. A receiver is disposed below the rotary supporting plate in a third direction perpendicular to the first direction and the second direction and receives the electrode plate assembly freely falling in response to rotation of the rotary supporting plate.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a configuration of an electrode plate stacking apparatus according to an embodiment of the present disclosure;
FIG. 2 illustrates a perspective diagram showing the rotary supporting plate and the rotary pressing plate shown in FIG. 1;
FIGS. 3A to 3D illustrate cross-sectional diagrams showing a process of manufacturing an electrode plate assembly using the electrode plate stacking apparatus shown in FIG. 1;
FIG. 4 illustrates a modified embodiment of the electrode plate stacking apparatus shown in FIG. 1;
FIG. 5 illustrates a configuration of an electrode plate stacking apparatus according to another embodiment of the present disclosure;
FIG. 6 illustrates a perspective diagram showing the first rotary plate and the second rotary plate of the electrode plate stacking apparatus shown in FIG. 5;
FIGS. 7A to 7C illustrate cross-sectional diagrams showing a process of pressing a separator and a positive electrode plate in the first folded portion FP1 using the electrode plate stacking apparatus shown in FIG. 5; and
FIG. 8 illustrates a flowchart showing an electrode plate stacking method using the electrode plate stacking apparatus shown in FIG. 5.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A typical electrode plate stacking apparatus for manufacturing an electrode plate stack structure includes a separator feeder, a stacking stage disposed below the separator feeder to clamp a separator, electrode plate feeders disposed on opposite sides of the stacking stage to alternately supply positive and negative electrode plates to respective surfaces of the clamped separator, and an electrode ejector configured to eject the electrode plate stack structure from the stacking stage.

In the electrode plate stacking apparatus as described above, an electrode plate stack structure including positive and negative electrode plates alternately stacked with a separator provided therebetween is formed by repeatedly performing separator folding and electrode plate supplying through electrode plate feed leads which supply the electrode plates while the separator folding operation is performed at a side portion of the electrode plate stage.

Accordingly, adhesion between the electrode plate and the separator is provided by the tension of the separator generated in the process of folding the separator covering the electrode plate, and no direct pressing is performed to bond the electrode plate and the separator to each other.

In a case where the adhesion between the separator and electrode plates within the electrode plate stack structure is not sufficient, the electrode plates on both sides of the separator may move, thereby increasing the risk of capacity degradation and heat generation in the cell.

In particular, because the electrode plate stack structure having a plurality of electrode plates stacked together forms a high-capacity secondary battery provided as a power source for high-energy equipment such as vehicles or industrial machinery, the movement of the electrode plates within the electrode plate stack structure may reduce the operating efficiency of the high-energy equipment and increase the risk of fire due to heat generation.

In addition, an electrode plate assembly for a low-capacity secondary battery including a single positive electrode plate and a single negative electrode plate is difficult to manufacture by a conventional electrode plate stacking apparatus, and tends to be manufactured in a jelly roll type rather than a stacking type.

However, the jelly roll type manufacturing process uses a sequential pressing process, which may limit the ability to increase manufacturing capacity.

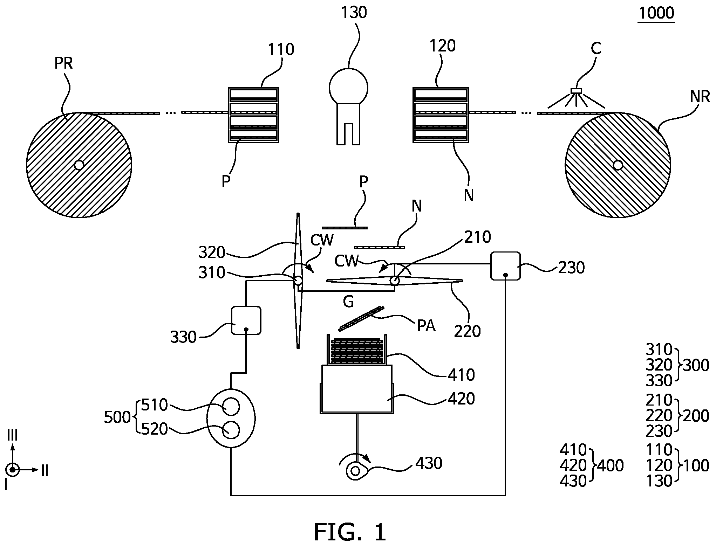

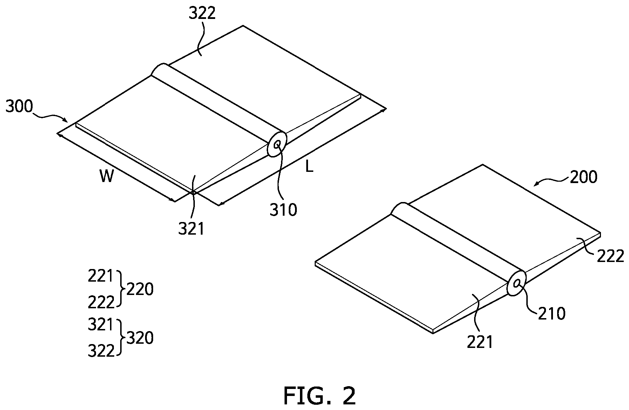

FIG. 1 illustrates a configuration of an electrode plate stacking apparatus according to an embodiment of the present disclosure, and FIG. 2 illustrates a perspective diagram showing the rotary supporting plate and the rotary pressing plate shown in FIG. 1.

Referring to FIG. 1, an electrode plate stacking apparatus 1000 according to one or more embodiments of the present disclosure may include an electrode plate feeder 100, a rotary supporting plate 200, a rotary pressing plate 300, and a receiver 400.

FIG. 1 illustrates an apparatus for stacking a single positive electrode plate and a single negative electrode plate using an adhesive without a separator (or separator film). Accordingly, the electrode plate stacking apparatus 1000 shown in FIG. 1 manufactures electrode plate assemblies PA in each of which the single positive electrode plate and the negative electrode plate are bonded.

In one or more embodiments, the electrode plate feeder 100 may include a first storage 110 configured to produce and store positive electrode plates P, a second storage 120 configured to produce and store negative electrode plates N, and a loader 130 configured to extract a positive electrode plate P or a negative electrode plate N from the first storage 110 and the second storage 120 and load the extracted electrode plate onto the rotary supporting plate 200.

After a positive electrode base plate is formed by a positive electrode plate forming process, the positive electrode base plate is cut into electrode units by notching to form a positive electrode plate P, and the cut positive electrode plates P are stored in the first storage 110. The positive electrode plates P stored in the first storage 110 may be extracted by the loader 130 as desired and supplied to an electrode plate stacking process.

Similarly, after a negative electrode base plate is formed by a negative electrode plate forming process, the negative electrode base plate is cut into electrode units by notching to form negative electrode plates N, and the cut negative electrode plates N are stored in the second storage 120. The negative electrode plates N stored in the second storage 120 may be extracted by the loader 130 as desired and supplied to the electrode plate stacking process.

In particular, the negative electrode plate N may be electrically separated from the stacked positive electrode plate P without a separator by an adhesive coating on the surface of the negative electrode plate N applied in the electrode plate forming process or the notching process. That is, the electrode plate assemblies PA each do not include a separator separating the positive electrode plate P and the negative electrode plate N, but may be separated from each other by the adhesive coating on the negative electrode plate N.

In one or more embodiments, the adhesive may include a mixture of alumina and polyvinylidene fluoride. However, it is apparent that the adhesive may include a variety of materials as long as the adhesive forms a coating on the negative electrode plate N to separate the positive electrode plate P from the negative electrode plate N and does not interfere with flow of cations.

The loader 130 may extract a positive electrode plate P or a negative electrode plate N from the first storage 110 or the second storage 120 and supply the same to the rotary supporting plate 200.

For example, the loader 130 may be implemented as a picker assembly to extract the positive electrode plate P or the negative electrode plate N from the first storage 110 or the second storage 120 and load the same directly onto the rotary supporting plate 200.

In another example, the loader 130 may be implemented as a conveyor belt to sequentially transport the positive electrode plate P or the negative electrode plate N. In this case, the conveyor belt may extend in a first direction I, with one end being connected to the rotary supporting plate 200.

In one or more embodiments, the loader 130 is configured to first extract the negative electrode plate N and load the same onto the rotary supporting plate 200, and then extract the positive electrode plate P and load the same onto the negative electrode plate N. Accordingly, the positive electrode plate P is first bonded to the negative electrode plate N by the adhesive coating on the negative electrode plate N.

In one or more embodiments, the rotary supporting plate 200 is configured to be rotatable about the first direction I so that the negative electrode plate N and the positive electrode plate P are sequentially stacked on the surface of the rotary supporting plate 200 to form an electrode plate assembly PA.

For example, the rotary supporting plate 200 includes a first shaft 210 extending in the first direction I and configured to rotate in a first rotational direction CCW with respect to the first direction I, a plate-shaped supporting blade 220 having a width W in the first direction I and a length L in the second direction II, with the central portion thereof being coupled to the first shaft 210, and a first driver 230 configured to selectively rotate the first shaft 210.

In addition, the rotary pressing plate 300 may include a second shaft 310 extending in the first direction I and configured to rotate in a second rotational direction CW with respect to the first direction I, a plate-shaped pressing blade 320 having a width W in the first direction I and a length L in the second direction II, with the central portion thereof being coupled to the second shaft 310, and a second driver 330 configured to selectively rotate the second shaft 310.

The first shaft 210 and the second shaft 310 are spaced apart by a predetermined separation distance G in the second direction II, which is a horizontal direction, through the central portions of the supporting blade 220 and the pressing blade 320. Accordingly, the supporting blade 220 and the pressing blade 320 are arranged to rotate with respect to the first shaft 210 and the second shaft 310, respectively, and interfere with each other in the range of the separation distance G.

The supporting blade 220 includes an active end 221 on which the electrode plate assembly PA is positioned and an inactive end 222 which is positioned symmetrically to the active end 221 with respect to the first shaft 210 and on which the electrode plate assembly PA is not positioned.

In addition, the pressing blade 320 may include a pressing end 321 configured to press the electrode plate assembly PA placed on the active end 221 and a free end 322 positioned symmetrically to the pressing end 321 with respect to the second shaft 310.

In this case, the first shaft 210 and the second shaft 310 may be spaced apart by a separation distance G corresponding to the length of the active end 221 or the pressing end 321, so that the pressing end 321 and the active end 221 may interfere with each other over substantially the entire surfaces thereof. Accordingly, the electrode plate assembly PA may be pressed by the entire surfaces of the active end 221 and the pressing end 321.

In this case, in a case where the electrode plate assembly PA is pressed, the supporting blade 220 and the pressing blade 320 may press against each other in response to a torque applied in the same direction. Accordingly, the electrode plate assembly PA positioned between the active end 221 and the pressing end 321 may be squeezed.

The rotary supporting plate 200 is driven by the first driver 230 and the rotary pressing plate 300 is driven by the second driver 330. For example, the first driver 230 and the second driver 330 may be implemented as servo motors, the operations of which are controlled by a logic controller, to respectively apply a torque to the rotary supporting plate 200 and the rotary pressing plate 300 depending on the operation or status of the rotary supporting plate 200 and the rotary pressing plate 300.

For example, the servo motors may be implemented as a programmable logic controller (PLC) servo motor.

That is, the first driver 230 may apply the driving torque of the motor to the first shaft 210 to rotate the supporting blade 220, and the second driver 330 may apply the driving torque of the motor to the second shaft 310 to rotate the pressing blade 220.

At this time, the torque applied to the first shaft 210 and the second shaft 310 may be changed appropriately depending on the characteristics of the motion performed by means of the supporting blade 220 and the pressing blade 320.

The first driver 230 and the second driver 330 are connected to the control center 500, and the operating conditions thereof may vary depending on the arrangement of the electrode plate assembly PA and the operating characteristics relative to the electrode plate assembly PA.

That is, the control center 500 may control the first driver 230 and the second driver 330 to correspond to the motion characteristics of the rotary supporting plate 200 and the rotary pressing plate 300. The supporting blade 220 and the pressing blade 320 may be aligned with or pressed against each other in response to the combination of motions of the first driver 230 and the second driver 330.

For example, the control center 500 may include an assembly controller 510 and a pressing controller 520.

The assembly controller 510 may control the first driver 230 and the second driver 330 so that the pressing blade 320 is positioned vertically in a third direction III and the supporting blade 220 is positioned parallel to the plane defined by the first direction I and the second direction II while the electrode plate assembly PA is being formed.

That is, while the electrode plate assembly PA is being manufactured, the pressing blade 320 may be controlled to be spaced apart from the supporting blade 220. At this time, the supporting blade 220 is aligned in a horizontal direction, and the negative electrode plate N and the positive electrode plate P are loaded by the loader 130 to be bonded together to form the electrode plate assembly PA.

Accordingly, the assembly controller 510 may control the pressing blade 320 and the supporting blade 220 so as to not interfere with each other.

As the formation of the electrode plate assembly PA using the adhesive of the negative electrode plate N is completed, the pressing controller 520 rotates the pressing blade 320 toward the supporting blade 220 to press the electrode plate assembly PA against the supporting blade 220.

In response to a pressing mode signal, the first driver 230 applies a clockwise torque to the supporting blade 220 and the second driver 330 rotates the pressing blade 320, aligned in the third direction III, clockwise to position the pressing end 321 to interfere with the active end 221.

At this time, the pressing end 321 and the active end 221 are positioned above and below each other, respectively, and press each other while suppressing rotation of each other in response to a torque applied in the same direction. Accordingly, the electrode plate assembly PA positioned between the pressing end 321 and the active end 221 may be pressed, and the adhesion stability may be improved.

The electrode plate assembly PA with improved adhesion stability falls downward by free fall and is collected in the receiver 400.

For example, the receiver 400 may include a flat support 410 having a flat surface, a receiving tray 420 disposed on the flat support 410 to receive electrode plate assemblies PA falling from the rotary supporting plate 200, and a height adjustment member 430 disposed below the flat support 410 to adjust the height of the receiving tray 420 according to the electrode plate assemblies PA being received.

The flat support 410 is configured with a flat top surface and may adjust the flatness of the receiving tray 420 fixed to the flat support 410. That is, due to the flat support 410, the receiving tray 420 may be disposed with sufficient flatness to reliably receive the falling electrode plate assembly PA.

The length and width of the receiving tray 420 may correspond to the electrode plate assemblies PA so that the falling electrode plate assemblies PA may be stacked sequentially. Accordingly, the electrode plate assemblies PA falling from the rotary supporting plate 200 may be stacked sequentially.

The height adjustment member 430 may control the distance between the receiving tray 420 and the rotary supporting plate 200 to be constant by lowering the height of the receiving tray 420 as the amount of the electrode plate assemblies PA received in the receiving tray 420 increases. Accordingly, the kinematic characteristics of the electrode plate assemblies PA may be uniformly maintained during falling.

In one or more embodiments, the height adjustment member 430 may have a cam structure that travels on an elliptical path. However, this is illustrative, and it will be appreciated that various adjustment members may be used as long as the distance between the receiving tray 420 and the rotary supporting plate 200 may be uniformly adjusted depending on the degree of storage of the electrode plate assemblies PA.

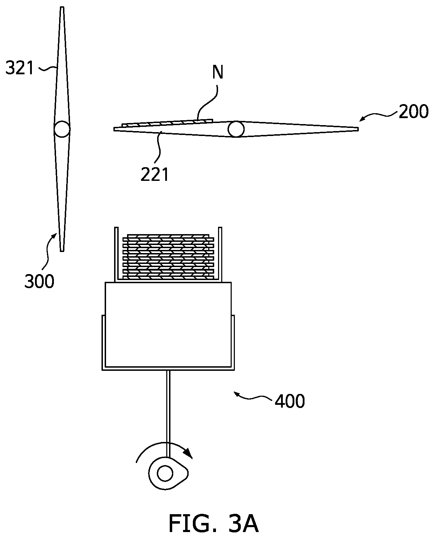

FIGS. 3A to 3D illustrate cross-sectional diagrams showing a process of manufacturing an electrode plate assembly using the electrode plate stacking apparatus shown in FIG. 1.

Referring to FIG. 3A, first, the supporting blade 220 is aligned in the horizontal direction and the pressing blade 320 is aligned in the vertical direction to be ready for electrode plate loading. After the electrode plate loading is ready, the loader 130 first extracts a negative electrode plate N and loads the same onto the active end 221 of the supporting blade 220.

At this time, the first driver 230 applies a driving force to stop the supporting blade 220 in the horizontal direction and the second driver 330 applies a driving force to stop the pressing blade 320 in the vertical direction.

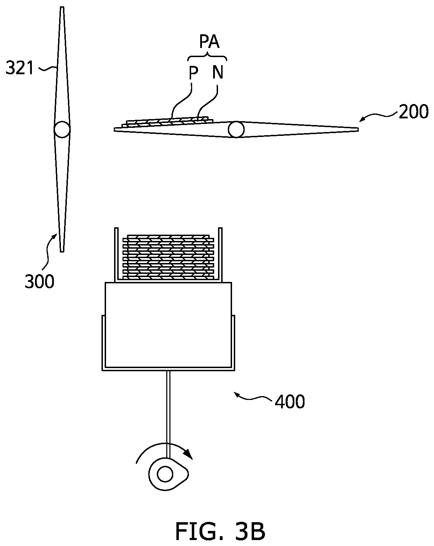

Referring to FIG. 3B, the loader 130 is used to extract and load a positive electrode plate P onto the supporting blade 220. As a result, the positive electrode plate P and the negative electrode plate N may be bonded together due to the adhesive on the negative electrode plate N at the active end 221 to form the electrode plate assembly PA.

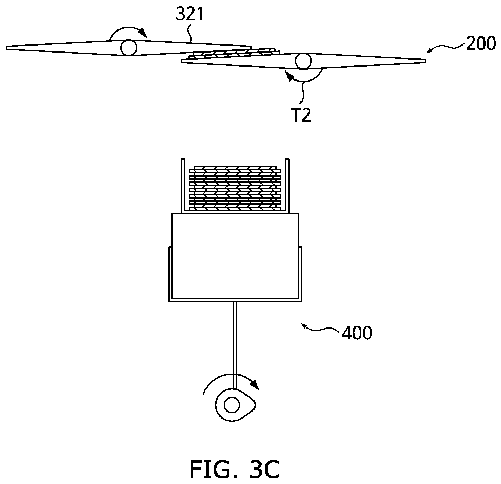

Referring to FIG. 3C, a pressing mode is performed for the electrode plate assembly PA.

The second driver 330 drives the pressing blade 320 to rotate and move toward the electrode plate assembly PA to contact the electrode plate assembly PA, and the first driver 230 applies a torque in the same direction as the pressing blade to the supporting blade 220.

Accordingly, the pressing blade 320 and the supporting blade 220 press the electrode plate assembly PA toward each other.

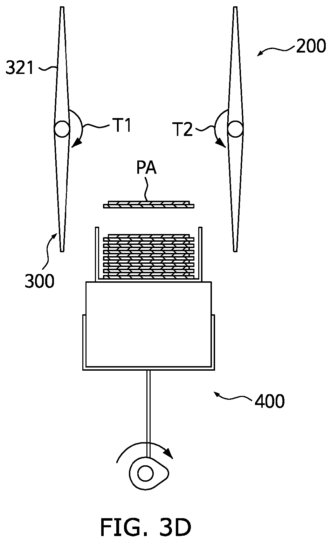

Referring to FIG. 3D, the pressing blade 320 is rotated by a first torque T1 in the clockwise direction and the supporting blade 220 is rotated by a second torque T2 in the counterclockwise direction so as to be aligned in a perpendicular direction with respect to each other.

Accordingly, the electrode plate assembly PA, which is pressurized and has improved adhesion stability, free-falls downward and is received in the receiver 400.

As the electrode plate assembly PA is received in the receiver 400 due to the rotation, the rotary supporting plate 200 is rotated again to be ready to load another negative electrode plate N.

Accordingly, the electrode plate assembly PA may be manufactured continuously by rotating the rotary supporting plate 200 and the rotary pressing plate 300, thereby increasing the manufacturing capacity and process efficiency of the electrode plate assembly PA.

According to the electrode plate stacking apparatus 1000 as described above, a single positive electrode plate P and a single negative electrode plate N may be individually extracted and placed on the supporting blade capable of rotating about the first direction I so as to form an electrode plate assembly PA using an adhesive instead of a separator, and the electrode plate assembly PA may be pressed using the rotary pressing plate 300 spaced apart from the supporting blade by a separation distance G in the second direction II and capable of rotating about the first direction.

The operations of forming and pressing the electrode plate assembly PA on the supporting blade 220 may be performed periodically by rotating movement in the first direction I, thereby increasing the production efficiency of the electrode plate assembly PA.

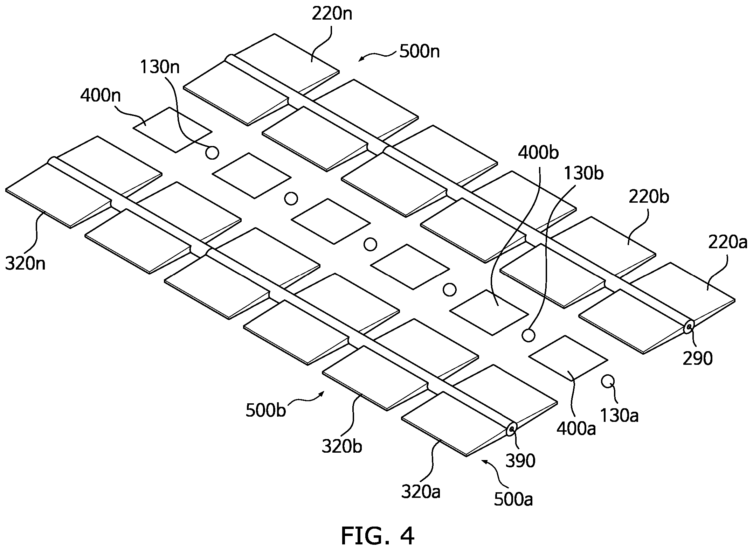

FIG. 4 illustrates a modified embodiment of the electrode plate stacking apparatus shown in FIG. 1.

Referring to FIG. 4, a modified electrode plate stacking apparatus 1001 may include a first modified shaft 290 sufficiently extending in a single first direction I, a plurality of supporting blades 220a to 220n rotatably coupled to the first modified shaft 290, a second modified shaft 390 sufficiently extending in the first direction I, and a plurality of pressing blades 320a to 320n rotatably coupled to the second modified shaft 390.

In this case, the plurality of supporting blades 220a to 220n and the plurality of pressing blades 320a to 320n are provided in equal numbers, such that a pair of plate structures of the supporting blades and the pressing blades are aligned in the first direction I.

Each of receivers 400a to 400n and each of loaders 130a to 130n may be disposed between the corresponding supporting and pressing blades.

For example, the first receiver 400a and the first loader 130a are disposed between the first supporting blade 220a and the first pressing blade 320a to form a first electrode plate stacking apparatus 500a.

Accordingly, a plurality of electrode plate stacking apparatuses 500a to 500n may be arranged along the first modified shaft 290 and the second modified shaft 390 to manufacture a plurality of electrode plate assemblies PA substantially at the same time. Accordingly, a large number of electrode plate assemblies PA may be manufactured to reduce manufacturing costs.

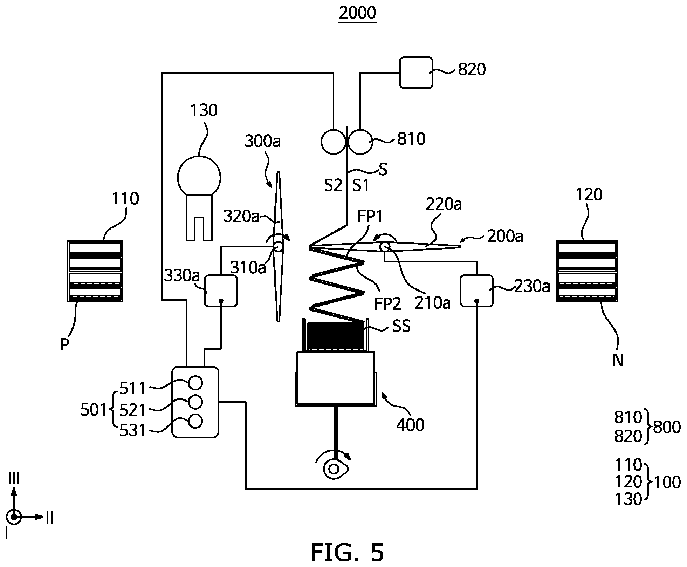

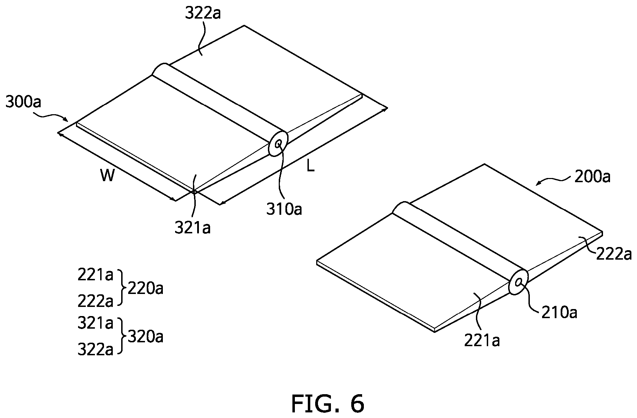

FIG. 5 illustrates a configuration of an electrode plate stacking apparatus according one or more embodiments of the present disclosure, and FIG. 6 illustrates a perspective diagram showing the first rotary plate and the second rotary plate of the electrode plate stacking apparatus shown in FIG. 5.

Referring to FIGS. 5 and 6, an electrode plate stacking apparatus 2000 according to another embodiment of the present disclosure may include an electrode plate feeder 100, a first rotary plate 200a, a second rotating plate 300a, a receiver 400, and a separator feeder 800 configured to supply a separator S.

In one or more embodiments, the electrode plate feeder 100 may alternately supply positive electrode plates P and negative electrode plates N to the separator S folded as described later. Accordingly, the electrode plate feeder 100 may include a first storage 110 configured to store positive electrode plates P, a second storage 120 configured to store negative electrode plates N, and a loader 130 configured to extract and load positive electrode plates P and negative electrode plates N onto the surfaces of the separator S.

The electrode plate feeder 100 has substantially the same configuration as the electrode plate feeder 100 provided in the electrode plate stacking apparatus 1000 shown in FIG. 1. Accordingly, any further detailed description of the electrode plate feeder 100 will be omitted.

The first rotary plate 200a is disposed on a first side portion S1 of the separator S to be rotatable about a first direction I perpendicular to a third direction III and may periodically fold the separator S and transform a portion of the separator into a first folded portion FP1.

Similarly, the second rotary plate 300a is disposed on the second side portion S2 of the separator S to be rotatable about the first direction I perpendicular to the third direction III and may periodically fold the separator S and transform a portion of the separator S into a second folded portion FP2.

At this time, the electrode plate feeder 100 supplies electrode plates to be separated in the third direction III by the separator S by alternately positioning electrode plates having different polarities on the first folded portion FP1 and the second folded portion FP2.

Accordingly, the positive electrode plate P and the negative electrode plate N are separated by the separator S and form an electrode plate stack structure SS, to which the separator S is bonded, in the third direction.

In particular, the positive electrode plate P disposed in the first folded portion FP1 and the negative electrode plate N disposed in the second folded portion FP2 are pressed between the first rotary plate 200a and the second rotary plate 300a, whereby the adhesion between the electrode plates and the separator S may be increased. Accordingly, a defect in which an electrode plate moves in the interior of a secondary cell may be prevented.

For example, the separator feeder 800 may include feed rollers 810 configured to supply the separator S from a feed reel (not shown) toward the receiver 400 and a separator driver 820 configured to move the feed rollers 810 in the first direction I to cover the first rotary plate 200a and the second rotary plate 300a with the first folded portion FP1 and the second folded portion FP2, respectively.

The feed rollers 810 may include various structures for guiding the separator S to the receiver 400. The single feed rollers 810 is disclosed in the present embodiment, but various guide rollers, redirecting rollers, and the like may be included.

The separator driver 820 may move the feed rollers 810 horizontally in a second direction II to form the first folded portion FP1 and the second folded portion FP2. For example, the separator driver 820 may be implemented as a PLC servo motor.

In particular, the separator S may be implemented as a double-sided adhesive material such that the top and bottom surfaces of the first folded portion FP1 and the second folded portion FP2 may be bonded to the positive electrode plate P and the negative electrode plate N.

The first rotary plate 200a may include a first rotary shaft 210a extending in the first direction I and configured to rotate in a first rotational direction with respect to the first direction I, a plate-shaped first rotary blade 220a having a width in the first direction I and a length in the second direction II, with the central portion thereof being coupled to the first rotary shaft 210a, and a first rotary driver 230a configured to selectively rotate the first rotary shaft 210a.

Similarly, the second rotary plate 300a may include a second rotary shaft 310a spaced apart from the first rotary shaft 210a in the second direction II, extending in the first direction I, and configured to rotate about the first direction I, a second rotary blade 320a having the same plate shape and size as the first rotary blade 220a, with the central portion thereof being coupled to the second rotary shaft 310a, and a second rotary driver 330a configured to selectively rotate the second rotary shaft 310a.

The first rotary plate 200a and the second rotary plate 300a have substantially the same configuration as the rotary supporting plate 200 and the rotary pressing plate 300 of the electrode plate stacking apparatus 1000 shown in FIG. 1. Accordingly, a detailed description of the first rotary plate 200a and the second rotary plate 300a will be omitted.

In this case, the first rotary blade 220a includes a first rotary supporting end 221a covered with the first folded portion FP1 and supporting the positive electrode plate P and a first rotary exposure end 222a positioned symmetrically to the first rotary supporting end 221a with respect to the first rotary shaft 210a and not covered with the first folded portion FP1, and the second rotary blade 320a includes a second rotary supporting end 321a covered with the second folded portion FP2 and supporting the negative electrode plate N and a second rotary exposure end 322a positioned symmetrically to the second rotary supporting end 321a with respect to the second rotary shaft 310a and not covered with the second folded portion FP2.

At this time, the electrode plate and the separator S may be pressed between the first rotating supporting end 221a and the second rotating supporting end 321a.

A control center 501 may also be provided. The control center 501 may be connected to the first rotary driver 230a, the second rotary driver 330a, and the separator driver 820 and control the first rotary plate 200a, the second rotary plate 300a, and the feed rollers 810 to press the positive electrode plate P, the negative electrode plate N, and the separator S in the first folded portion FP1 and the second folded portion FP2.

For example, the control center 501 may include a first folding controller 511 configured to control the first rotary plate 200a and the feed rollers 810 to form the first folded portion FP1 in the separator S, a second folding controller 521 configured to control the second rotary plate 300a and the feed rollers 810 to form the second folded portion FP2 in the separator S, and a pressing controller 531 configured to control the driving of the first rotary plate 200a and the second rotary plate 300a to press the electrode plates and the separator S in the first folded portion FP1 and the second folded portion FP2.

The first folding controller 511 rotates the first rotary plate 200a disposed on the first side portion S1 of the separator S to push the separator S to protrude in the direction of the second side portion S2, and drives the separator driver 820 to move the feed rollers 810 toward the first rotary plate 200a. Accordingly, the separator S moves to cover the first rotary blade 220a, thereby forming the first folded portion FP1.

Similarly, the second folding controller 521 rotates the second rotary plate 300a disposed on the second side portion S2 of the separator S to push the separator S to protrude in the direction of the first side portion S1, and drives the separator driver 820 to move the feed rollers 810 toward the second rotary plate 300a. Accordingly, the separator S moves to cover the second rotary blade 320a, thereby forming the second folded portion FP2.

The pressing controller 531 may press the positive electrode plate P, the negative electrode plate N, and the separator S to improve the adhesion stability of the electrode plates and the separator S. The pressing controller 531 may control the first rotary driver 230a and the second rotary driver 330a to correspond to the operating characteristics of the first rotary plate 200a and the second rotary plate 300a.

In a case where the first folded portion FP1 is formed and the positive electrode plate P is loaded onto the first folded portion FP1, or in a case where the second folded portion FP2 is formed and the negative electrode plate N is loaded onto the second folded portion FP2, the pressing controller 531 may control the first rotation driver 230a and the second rotation driver 330a such that the second rotation blade 320a is positioned vertically in the third direction III and the first rotation blade 220a is positioned parallel to the plane defined by the first direction I and the second direction II.

That is, the second rotating blade 320a may be controlled to be spaced apart from the first rotating blade 220a during the loading of the positive electrode plate P and the negative electrode plate N onto the separator S. At this time, the first rotating blade 220a may be aligned in the horizontal direction and may be provided as a base plate for loading the positive electrode plate P or the negative electrode plate N when the negative electrode plate N and the positive electrode plate P are loaded by the loader 130.

In this case, the separator S is formed of a double-sided adhesive material, and the bottom surface of the positive electrode plate P or the negative electrode plate N to be loaded is bonded to the separator S by the adhesive material.

As the positive electrode plate P is bonded to the first folded portion FP1, the second rotating blade 320a is rotated toward the first rotating blade 220a to press the positive electrode plate P and the separator S. Accordingly, the adhesion stability of the positive electrode plate P and the separator S may be improved.

At this time, the second rotary supporting end 321a and the first rotary supporting end 221a are positioned above and below each other, respectively, and press each other while suppressing rotation of each other in response to a torque applied in the same direction. Accordingly, the positive electrode plate P positioned between the second rotary supporting end 321a and the first rotary supporting end 221a may be pressed, and the adhesion stability may be improved.

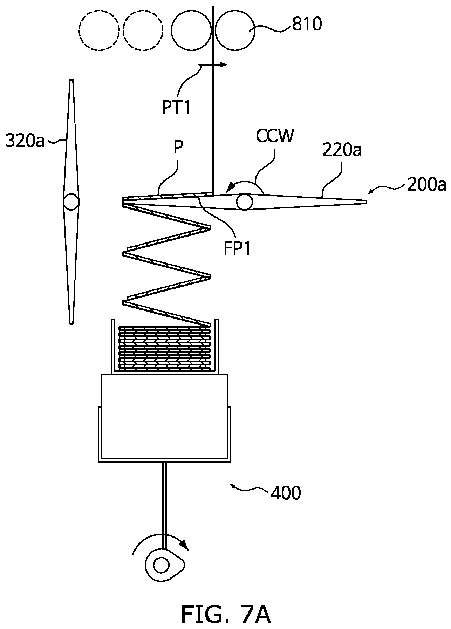

FIGS. 7A to 7C illustrate cross-sectional diagrams showing a process of pressing a separator and a positive electrode plate in the first folded portion FP1 using the electrode plate stacking apparatus shown in FIG. 5.

Referring to FIG. 7A, after the first rotary blade 220a has rotated, the feed rollers 810 is moved in the first horizontal direction PT1 to form the first folded portion FP1.

The first folded portion FP1 is formed to cover the first rotary supporting end 221a of the first rotary blade 220a, and a positive electrode plate P is loaded onto the top surface of the first folded portion FP1 supported by the first rotary supporting end 221a. The positive electrode plate P is bonded to the separator S by the adhesive material of the separator S.

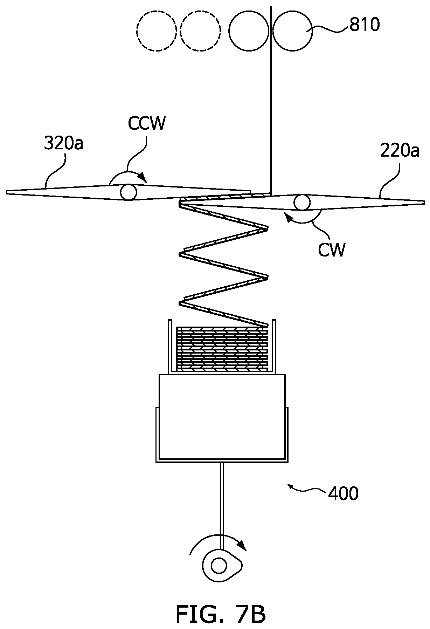

Referring to FIG. 7B, the second rotary blade 320a is rotated clockwise to press the positive electrode plate P, and the first rotary blade 220a is pressed against the second rotary blade 320a by applying a torque in the same direction as the second rotary blade 320a.

Accordingly, the positive electrode plate P positioned between the first rotary blade 220a and the second rotary blade 320a is sufficiently pressed against and bonded to the separator S.

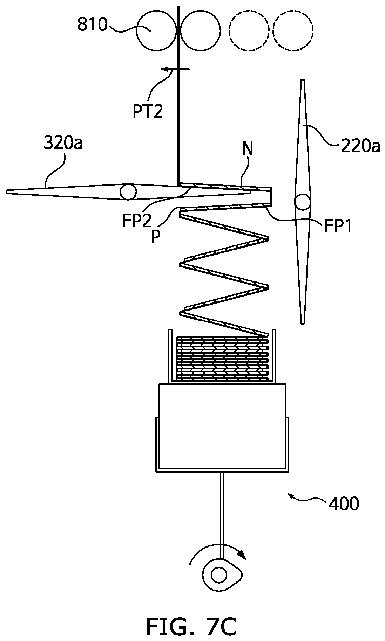

Referring to FIG. 7C, when the first rotary blade 220a is rotated counterclockwise to release the support for the first folded portion FP1, the separator S to which the positive electrode plate P is bonded is received in the receiver 400 by free fall.

In addition, a driving force is applied to maintain the second rotary blade 320a in the horizontal state, and the separator S is moved in the second horizontal direction PT2 to cover the second rotary supporting end 321a of the second rotary blade 320a. Accordingly, the feed rollers 810 returns to the original position and the separator S is formed into a second folded portion FP2 covering the second rotary supporting end 321a.

Subsequently, after the negative electrode plate N is loaded onto the second folded portion FP2, the negative electrode plate N may be bonded to the second folded portion FP2 by repeating the process shown in FIGS. 7a to 7c using the first rotary blade 220a.

As the rotation of the first rotary blade 220a and the second rotary blade 320a is repeated, an electrode plate stack structure SS with the positive electrode plate P and the negative electrode plate N bonded in a zigzag shape is stacked in the receiver 400.

The receiver 400 is disposed below the first rotary plate 200a and the second rotary plate 300a to continuously receive a falling bonded structure of the positive electrode plate P and the separator S and a falling bonded structure of the negative electrode plate N and the separator S.

The receiver 400 has substantially the same configuration as the receiver 400 of the electrode plate stacking apparatus 1000 shown in FIG. 1, and therefore any further detailed description thereof will be omitted.

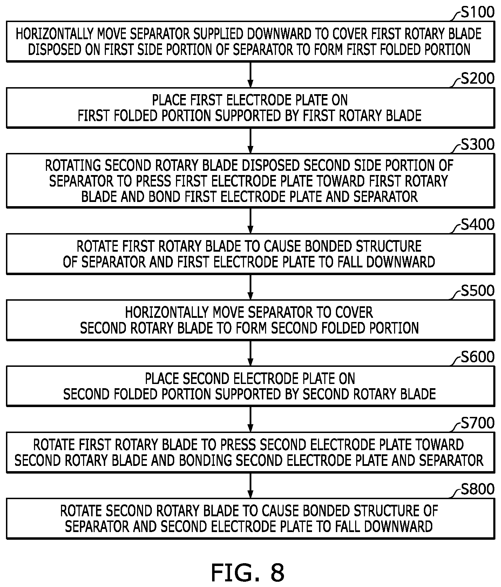

FIG. 8 illustrates a flowchart showing an electrode plate stacking method using the electrode plate stacking apparatus shown in FIG. 5.

Referring to FIG. 8, the separator S supplied downward is first aligned horizontally by rotating the first rotary blade 220a disposed on the first side portion S1 about the first direction I, and then the separator S is moved horizontally to cover the first rotary blade 220a to form the first folded portion FP1 (step S100).

The separator S may be protruded in the direction of the second side portion S2 by rotating the first rotary blade 220a positioned on the first side portion S1 counterclockwise and the feed rollers 810 may be moved in the first horizontal direction (PT1 in FIG. 7A) toward the first rotary shaft 210a so as to form the first folded portion FP1 covering the first rotary blade 220a.

Thereafter, the positive electrode plate P is placed on the first folded portion FP1 supported by the first rotary blade 220a (step S200). For example, the positive electrode plate P may be extracted from the first storage 110 and placed on the surface of the first folded portion FP1 of the separator S.

The positive electrode plate P may be pressed against the first rotary blade 220a by rotating the second rotary blade 320a disposed on the second side portion S2 of the separator S so as to be horizontally aligned with and face the first rotary blade 220a. Accordingly, the positive electrode plate P and the separator S are bonded between the first rotary blade 220a and the second rotary blade 320a (step S300).

At this time, the first rotary blade 220a and the second rotary blade 320a may be configured such that the first rotary blade 220a and the second rotary blade 320a press against each other in response to a rotational torque in the same direction applied thereto.

Subsequently, the first rotary blade 220a is rotated about the first direction I, causing the adhesive of the separator S and the positive electrode plate P to fall downward (step S400). At this time, a driving force is applied to the second rotary blade 320a to maintain the horizontal state, and the separator S may be moved horizontally to cover the second rotary blade 320a to form the second folded portion FP2 (step S500).

For example, the feed rollers 810 may be moved in the second horizontal direction (PT2 in FIG. 7C) toward the second rotary shaft 310a to form the second folded portion FP2.

A negative electrode plate N is placed on the second folded portion FP2 supported by the second rotary blade 320a (step S600), and the negative electrode plate N and the separator S are bonded by rotating the first rotary blade 220a and pressing the negative electrode plate N against the second rotary blade 320a (step S700).

At this time, the bonding of the negative electrode plate N and the separator S may be performed by applying a torque to the first rotary blade 220a and the second rotary blade 320a to rotate in the same direction.

Accordingly, the adhesion stability of the positive electrode plate P, the negative electrode plate N, and the separator S may be improved.

Thereafter, the second rotary blade 320a is rotated to cause the adhesive bonded to the separator and negative electrode plate N to fall downward (step S800) and to be received in the receiver 400.

According to the electrode plate stacking apparatus as described above and the electrode plate stacking method using the same, a single positive electrode plate P and a single negative electrode plate N may be individually extracted and placed on a supporting blade capable of rotating about the first direction I to form an electrode plate assembly PA using an adhesive instead of a separator, and the electrode plate assembly PA may be pressed using the rotary pressing plate 300 spaced apart from the supporting blade by a separation distance G in the second direction II and capable of rotating about the first direction.

In addition, the adhesion stability may be improved by pressing the positive electrode plate P and negative electrode plate N and the separator S using a pair of rotary plates. Accordingly, any movement inside a secondary cell may be reduced and the stability of the secondary cell may be improved.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

### LIST OF REFERENCE SIGNS

- 90: Rotated
- 100: Electrode plate feeder
- 110: First storage
- 120: Second storage
- 130: Loader
- 130a: First loader
- 200: Rotary supporting plate
- 200a: First rotary plate
- 210: First shaft
- 210a: First rotary shaft
- 220: Blade
- 220a: Blade
- 221: Active end
- 221a: Supporting end
- 222: Inactive end
- 222a: First rotary exposure end
- 230: First driver
- 230a: Driver
- 290: First modified shaft
- 300: Rotary pressing plate
- 300a: Plate
- 310: Second shaft
- 310a: Second rotary shaft
- 320: Pressing blade
- 320a: Blade
- 321: Pressing end
- 321a: Supporting end
- 322: Free end
- 322a: Second rotary exposure end
- 330: Second driver
- 330a: Driver
- 390: Second modified shaft
- 400: Receiver
- 400a: First receiver
- 410: Flat support
- 420: Receiving tray
- 430: Height adjustment member
- 500: Control center
- 500a: First electrode plate stacking apparatus
- 501: Control center
- 510: Assembly controller
- 511: First folding controller
- 520: Pressing controller
- 521: Second folding controller
- 531: Pressing controller
- 800: Separator feeder
- 810: Feed rollers
- 820: Separator driver
- 1000: Electrode plate stacking apparatus
- 1001: Modified electrode plate stacking apparatus
- 2000: Electrode plate stacking apparatus

- FP1: First folded portion of separator
- FP2: Second folded portion of separator
- N: Negative electrode plate
- P: Positive electrode plate
- PA: Electrode plate assembly
- S: Separator
- S1: First side portion of separator
- S2: Second side portion
- SS: Electrode plate stack structure

## Claims

1. An electrode plate stacking apparatus (1000) comprising:
a rotary supporting plate (200) configured to be rotatable about a first direction and allow a positive electrode plate (P) to be bonded to a negative electrode plate (N) having a surface coated with an adhesive to form an electrode plate assembly (PA);
a rotary pressing plate (300) spaced apart from the rotary supporting plate (200) in a second direction perpendicular to the first direction and configured to be rotatable about the first direction and interfere with the rotary supporting plate (200) to press the electrode plate assembly (PA); and
a receiver (400) disposed below the rotary supporting plate (200) in a third direction perpendicular to the first direction and the second direction and configured to receive the electrode plate assembly (PA) freely falling in response to rotation of the rotary supporting plate (200).

2. The electrode plate stacking apparatus (1000) as claimed in claim 1, wherein the rotary supporting plate (200) comprises:
a first shaft (210) configured to extend in the first direction and configured to rotate in a first rotational direction with respect to the first direction;
a plate-shape supporting blade (220) configured to have a width in the first direction and a length in the second direction, with a central portion thereof being coupled to the first shaft (210); and
a first driver (230) configured to selectively rotate the first shaft (210).

3. The electrode plate stacking apparatus (1000) as claimed in claim 2, wherein the rotary pressing plate (300) comprises:
a second shaft (310) spaced apart from the first shaft (210) in the second direction and extending in the first direction and configured to rotate about the first direction;
a pressing blade (320) configured to have a same plate shape and size as those of the supporting blade (220), with a central portion thereof being coupled to the second shaft (310); and
a second driver (330) configured to selectively rotate the second shaft (310).

4. The electrode plate stacking apparatus (1000) as claimed in claim 3, wherein the supporting blade (220) comprises an active end (221) on which the electrode plate assembly (PA) is positioned and an inactive end (222) positioned symmetrically to the active end (221) with respect to the first shaft (210), with the electrode plate assembly (PA) not being positioned on the inactive end (222), and
the pressing blade (320) comprises a pressing end (321) configured to press the electrode plate assembly (PA) placed on the active end (221) and a free end (322) positioned symmetrically to the pressing end (321) with respect to the second shaft (310).

5. The electrode plate stacking apparatus (1000) as claimed in claim 4, wherein the first shaft (210) and the second shaft (310) are spaced apart from one another by a separation distance corresponding to the length of the active end (221) or the pressing end (321) to press the electrode plate assembly (PA) with an entire surface of the pressing end (321).

6. The electrode plate stacking apparatus (1000) as claimed in claim 4 or 5, further comprising a control center (500) connected to the first rotary driver (230) and the second driver (330) and configured to control operations of the supporting blade (220) and the pressing blade (320) in response to the electrode plate assembly (PA) being placed and the electrode plate assembly (PA) being pressed.

7. The electrode plate stacking apparatus (1000) as claimed in claim 6, wherein the control center (500) comprises:
an assembly controller (510) configured to control the first driver (230) and the second driver (330) so that the pressing blade (320) is positioned vertically in the third direction and the supporting blade (220) is positioned parallel to a plane defined by the first direction and the second direction while the electrode plate assembly (PA) is being formed; and
a pressing controller (520) configured to control the first driver (230) and the second driver (330) to apply a torque in a same direction to the pressing blade (320) and the supporting blade (220) so that the supporting blade (220) and the pressing blade (330) press against one another while the electrode plate assembly (PA) is being pressed.

8. An electrode plate stacking apparatus (2000) comprising:
a separator feeder (800) configured to supply a separator (S) downwardly in a third direction being a vertical direction;
a first rotary plate (200a) disposed on a first side portion (S1) of the separator (S) to be rotatable about a first direction perpendicular to the third direction and configured to periodically fold the separator (S) and transform a portion of the separator (S) into a first folded portion (FP1);
a second rotary plate (300a) disposed on the second side portion (S2) of the separator (S) to be spaced apart from the first rotary plate (200a) in a second direction perpendicular to the first direction and the third direction and configured to be rotatable about the first direction and periodically fold the separator (S) and transform a portion of the separator (S) into a second folded portion (FP2);
an electrode plate feeder (100) configured to supply a plurality of electrode plates (P, N) to be separated in the third direction by the separator by alternately positioning the electrode plates (P, N) having different polarities on the first folded portion (FP1) and the second folded portion (FP2); and
a receiver (400) disposed below the separator feeder (800) and configured to receive an electrode plate stack structure (SS) including the electrode plates (P, N) placed on the first folded portion (FP1) and the second folded portion (FP2) and separated from each other,
wherein the separator (S) and the electrode plates (P, N) are pressed between the first rotary plate (200a) and the second rotary plate (300a).

9. The electrode plate stacking apparatus (2000) as claimed in claim 8, wherein the separator (S) comprises a double-sided adhesive material such that top and bottom surfaces of the first folded portion (FP1) and the second folded portion (FP2) are bonded to the electrode plates.

10. The electrode plate stacking apparatus (2000) as claimed in claim 8 or 9, wherein the separator feeder (800) comprises:
feed rollers (810) configured to supply the separator (S) from a feed reel toward the receiver (400); and
a separator driver (820) configured to move the feed rollers in the first direction to cover the first rotary plate (200a) and the second rotary plate (300a) with the first folded portion (FP1) and the second folded portion (FP2), respectively.

11. The electrode plate stacking apparatus (2000) as claimed in claim 10, wherein the first rotary plate (200a) comprises a first rotary shaft (210a) extending in the first direction and configured to rotate about the first direction, a plate-shaped first rotary blade (220a) having a width in the first direction and a length in the second direction, with a central portion thereof being coupled to the first rotary shaft (210a), and a first rotary driver (230a) configured to selectively rotate the first rotary shaft (210a), and
the second rotary plate (300a) comprises a second rotary shaft (310a) spaced apart from the first rotary shaft (210a) in the second direction, extending in the first direction, and configured to rotate about the first direction, a second rotary blade (320a) having the same plate shape and size as the first rotary blade (220a), with a central portion thereof being coupled to the second rotary shaft (310a), and a second rotary driver (330a) configured to selectively rotate the second rotary shaft (310a).

12. The electrode plate stacking apparatus (2000) as claimed in claim 11, wherein the first rotary blade (220a) comprises a first rotary supporting end (221a) covered with the first folded portion (FP1) and supporting one of the electrode plates (P) and a first rotary exposure end (222a) positioned symmetrically to the first rotary supporting end (221a) with respect to the first rotary shaft (210a) and not covered with the first folded portion (FP1),
the second rotary blade (320a) comprises a second rotary supporting end (321a) covered with the second folded portion (FP2) and supporting another one of the electrode plates (N) and a second rotary exposure end (322a) positioned symmetrically to the second rotary supporting end (321a) with respect to the second rotary shaft (310a) and not covered with the second folded portion (FP2), and
the electrode plates and the separator (S) are pressed between the first rotary supporting end (221a) and the second rotary supporting (321a) end.

13. The electrode plate stacking apparatus (2000) as claimed in claim 12, further comprising a control center (501) connected to the first rotary driver (230a), the second rotary driver (330a), and the separator driver (820) and configured to control the first rotary plate (200a), the second rotary plate (300a), and the feed rollers to press the electrode plates and the separator (S) in the first folded portion (FP1) and the second folded portion (FP2).

14. The electrode plate stacking apparatus (2000) as claimed in claim 13, wherein the control center (501) comprises:
a first folding controller (511) configured to control the first rotary plate (200a) and the feed rollers (810) to form the first folded portion (FP1) in the separator (S);
a second folding controller (521) configured to control the second rotary plate (300a) and the feed rollers (810) to form the second folded portion (FP2) in the separator (S); and
a pressing controller (531) configured to control the driving of the first rotary plate (200a) and the second rotary plate (300a) to press the electrode plates and the separator (S) in the first folded portion (FP1) and the second folded portion (FP2).

15. An electrode plate stacking method comprising:
horizontally moving a separator (S) supplied downward to cover a first rotary blade (220a) disposed on a first side portion (S1) of the separator (S) to form a first folded portion (FP1);
positioning a first electrode plate (P) on the first folded portion (FP1) supported by the first rotary blade (220a);
rotating a second rotary blade (320a) disposed a second side portion (S2) of the separator (S) to press the first electrode plate (P) toward the first rotary blade (220a) and bonding the first electrode plate (P) and the separator (S);
rotating the first rotary blade (220a) to cause a bonded structure of the separator (S) and the first electrode plate (P) to fall downwardly;
horizontally moving the separator (S) to cover the second rotary blade (320a) to form a second folded portion (FP2);
positioning a second electrode plate (N) on the second folded portion (FP2) supported by the second rotary blade (320a);
rotating the first rotary blade (220a) to press the second electrode plate (N) toward the second rotary blade (320a) and bonding the second electrode plate (N) and the separator (S); and
rotating the second rotary blade (320a) to cause a bonded structure of the separator (S) and the second electrode plate (N) to fall downward.
